# EUROPEAN PATENT APPLICATION

(11) **EP 2 533 160 A1**
(43) Date of publication of application: **12.12.2012**
(21) Application number: 10850562.9
(22) Date of filing: 25.09.2010
(51) Int. Cl.: G06F 17/30

(54) **METHOD, SYSTEM AND APPARATUS FOR DATA SYNCHRONIZATION BETWEEN DATABASES**

(30) Priority: 26.04.2010 CN 201010159165
(71) Applicant: ZTE Corporation, Shenzhen, Guangdong 518057 (CN)
(72) Inventor: DING, Qipeng, Shenzhen Guangdong 518057 (CN)
(74) Representative: Mercer, Daniel John
(86) International application number: PCT/CN2010/077267
(87) International publication number: WO 2011/134231

(57) **Abstract**

A method, system and apparatus for data synchronization between databases are disclosed, which include: after obtaining logical change records (LCRs) generated in a source database, negotiating with a destination database about a LCR format that can be supported by the destination database, transforming the obtained LCRs generated in the source database to the format supported by the destination database, and then sending the transformed LCRs to the destination database so that no matter what message formats the source database and the destination database support, the destination database can correctly recognize the LCRs generated in the source database, and hence the recognized LCRs are applied in the destination database respectively to achieve the purpose of data synchronization between the source database and the destination database.

## Description

### Technical Field

The present invention relates to the computer field, and in particular to a method, system and apparatus for data synchronization between databases.

### Background Art

The database has become one of the indispensible infrastructures in the information system due to its data functions such as data storage and data backup, and any large-scale information system can only exist with databases.

In practical applications, due to the complexity of service logic and modularized design of the functions, generally multiple sets of databases are deployed in one information system, and the multiple sets of databases need to share data through cooperation, which requires that data synchronization between various databases can be achieved. The current mainstream data synchronization technologies include Streams of Oracle, Replication Server of Sybase, etc., and the basic principles thereof are all that the logical change records (LCRs) in the database log (redolog) file in the source database are snatched, and then the snatched LCRs are applied in the destination database respectively according to the order of generation of LCRs, thereby achieving data synchronization between the destination database and the source database.

In the above mode for data synchronization between databases, not only the content of the synchronization message used by the source database and the destination database is the same, but also their respective formats for transmitting the synchronization message must also be universal so as to synchronize the data. In the practical application of synchronization process, the formats of the synchronization message supported by the source database and the destination database are not necessarily the same, or even the versions and architectures of the source database and the destination database are not the same, leading to the result that the architecture of data synchronization is inflexible, and data synchronization may not be correctly achieved between the source database and the destination database.

In conclusion, in the current mode for database synchronization, there exists the problem that the formats of synchronization message supported by the source database and the destination database are not universal, thus causing failure of data synchronization between the source database and the destination database.

### Summary of the Invention

An example of the present invention provides a method, system and apparatus for data synchronization between databases so as to solve the problem existing in the prior art that the formats of synchronization message supported by the source database and the destination database are not universal, thus causing failure of data synchronization between the source database and the destination database.

A method for data synchronization between databases, comprising the following steps of:
obtaining logical change records (LCRs) generated after a data operation in a source database;
detecting a LCR format supported by a destination database, transforming the obtained LCRs generated in the source database to the format supported by the destination database, and then sending the transformed LCRs to the destination database.

A system for data synchronization between databases, comprising:
a source database, used to generate logical change records (LCRs) after a data operation;
an apparatus for data synchronization, used to obtain the LCRs generated in the source database, detect a LCR format supported by a destination database, transform the obtained LCRs generated in the source database to the format supported by the destination database, and then send the transformed LCRs to the destination database;
a destination database, used to receive the LCR from the apparatus for data synchronization.

An apparatus for data synchronization between databases, comprising:
a collecting module, used to obtain logical change records (LCRs) generated after a data operation in a source database;
an application module, used to detect a LCR format supported by a destination database, transform the obtained LCRs generated in the source database to the format supported by the destination database, and then send the transformed LCRs to the destination database.

The example of the present invention have the following beneficial effects:

In the example of the present invention, the LCRs generated in the source database are not directly synchronized to the destination database, but the LCR format that can be supported by the destination database is negotiated with the destination database after the LCRs generated in the source database are obtained, and the obtained LCRs generated in the source database are transformed to the format supported by the destination database and then are sent to the destination database, so that no transaction what message formats the source database and the destination database support, the destination database can correctly recognize the LCRs generated in the source database, and hence the recognized LCRs are applied in the destination database respectively, thereby achieving the purpose of data synchronization between the source database and the destination database.

### Brief Description of Drawings

FIG. 1 illustrates the method for data synchronization between databases according to Example one of the present invention.
FIG. 2 illustrates the method for data synchronization between databases according to Example three of the present invention.
FIG. 3 illustrates the structure of the system for data synchronization between databases according to Example five of the present invention.
FIG. 4 illustrates the structure of the apparatus for data synchronization between databases according to Example six of the present invention.

### Specific Embodiments

The examples of the present invention will be described below in detail with reference to the drawings.

The LCR involved in each example of the present invention reflects a particular data operation on a particular record in the source database, and its content includes: the ID of the involved transaction (optional), operation type (insertion, update, deletion), a list of changed filed, the values of the fields before change, the values of the fields after change, the primary key field name, the primary key field value, and so on. The destination database can reproduce the data operation according to the information in the LCRs.

### Example one

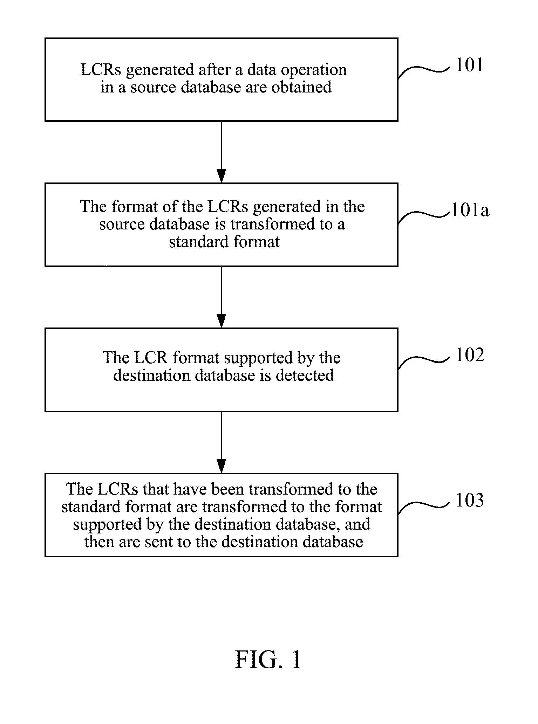

As shown in FIG. 1, it illustrates the method for data synchronization between databases according to Example one of the present invention. This example mainly comprises the following steps.

In step 101, LCRs generated after a data operation in a source database are obtained.

If it is assumed that the executing body in this step is the apparatus for data synchronization between databases (referred to as data synchronization apparatus), the multiple modes for obtaining the LCRs generated in the source database in this step include but not limited to the following two modes.

The first mode:
a redolog document is generated after the source database performs an operation on the data, the source database voluntarily parses the LCRs from the redolog document, and the format of the LCRs parsed out by the source database is the format supported by the destination database. After the source database parses our the LCRs, the source database may voluntarily push the LCRs parsed out to the data synchronization apparatus, or the data synchronization apparatus may request the source database for the LCRs, and after the source database accepts the request from the data synchronization apparatus, the data synchronization apparatus snatches the LCRs from the source database.

The second mode:
after a redolog document is generated after the source database performs an operation on the data, the source database does not parse the LCRs, but pushes the redolog document to the data synchronization apparatus, or the data synchronization apparatus requests the source database for the redolog document. After obtaining the redolog document, the data synchronization apparatus parses out the LCRs using the Application Programming Interface (API) capable of parsing the redolog document provided by the source database or an open-ended redolog document format.

In step 102, the LCR format supported by the destination database is detected.

In this step, the executing body, the data synchronization apparatus, can make a handshake negotiation with the destination database to determine at least one LCR format that can be supported by the destination database, for example Structured Query Language (SQL) format.

In step 103, the LCRs generated in the source database are transformed to the format supported by the destination database, and then are sent to the destination database.

In this step, the executing body, the data synchronization apparatus, is connected to multiple types of destination databases through Open Data Base Connectivity (ODBC), Java Data Base Connectivity (JDBC), or special interface database such as Oracle Caller Interface (OCI)/Sybase Database Library (DB-LIB)/ Sybase Client Library (CT-LIB). The format of the LCRs generated in the source database is transformed to the format identifiable to the destination database, and then the LCRs are sent to the destination database so that the destination database can determine the operation in the source database according to the received LCRs, and the operation performed on the data in the source database is applied in the destination database.

In the scheme of this example of the present invention, if the destination database supports any highly-efficient warehousing mode such as array binding, it can be implemented in this step.

The executing body, the data synchronization apparatus, in this example one can perform optimization processing on the LCRs from the source database, and therefore, before the optimization processing on the LCRs, the data synchronization apparatus may further execute the following steps between steps 101 and 102.

In step 101a, the format of the LCRs generated in the source database is transformed to a standard format.

The standard format may be any one of optional formats of the LCRs.

Since the LCR format of the source database is transformed to the standard format before step 102, the LCRs having already been transformed to the standard format need to be further transformed to the format supported by the destination database in step 103 before transmission.

### Example two:

Example two of the present invention describes the scheme of Example one through a typical application scene.

It is assumed that both the source database and the destination database maintain a demonstration tab (DEMO_TAB), the definitions are as follows:
CREATE TABLE DEMO_TAB( //establishing a demonstration tab
FLD_A NUMBER PRIMARY KEY,
FLD_B CHAR(100),
FLD_C VARCHAR(100))

The above three fields of FLD_A, FLD_B and FLD_C represent three data types.

The first step: a set of operations are performed on the data in FLD_A, FLD_B and FLD_C in the source database:
INSERT INTO DEMO_TAB VALUES(1, CHAR1' , 'VARCHAR1'); //Insert operation
UPDATE DEMO_TAB SET //Update operation
FLD_B='CHAR2', FLD_C='VARCHAR2' WHERE A=1;
DELETE FROM DEMO_TAB WHERE FLD_A=1; //Delete operation

The second step: three LCRs of INSERT, UPDATE and DELETE are obtained.

The third step: the obtained three LCRs are transformed to the standard format, and format negotiation is carried out with the destination database.

The fourth step: the LCRs of the standard format are transformed to the format supported by the destination database, and the transformed LCRs are sent to the destination database in the order of generation.

The fifth step: the destination database applies the LCR received in turn to the DEMO_TAB maintained by itself.

By the method for data synchronization between databases provided in Example one and Example two of the present invention, no transaction what LCR format the source database and the destination database support, the LCRs generated in the source database can be transformed to the format that can be supported by the destination database and are then sent to the destination database, so the destination database can apply the received LCRs to its own data to complete data synchronization between the source database and the destination database.

### Example three

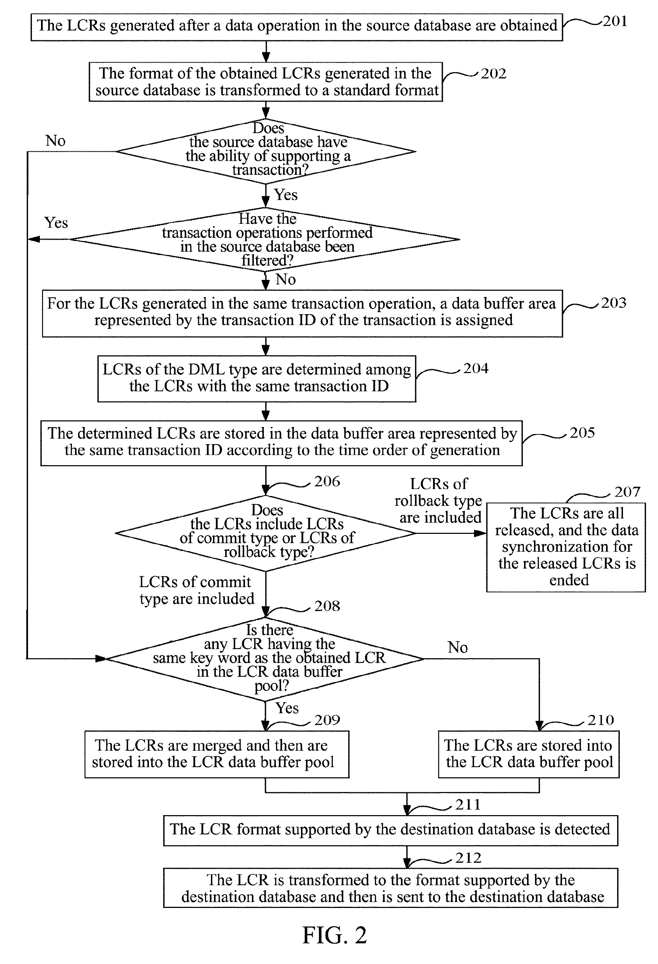

The scheme of Example three is an optimized scheme of Example one, wherein the LCRs from the source database are optimized before being sent to the destination database. As shown in FIG. 2, it illustrates the flow of the method of Example three, which comprises the following steps.

In step 201, the LCRs generated after a data operation in the source database are obtained.

In step 202, the format of the obtained LCRs generated in the source database is transformed to a standard format.

In step 203, for the LCRs generated in the same transaction operation, a data buffer area represented by the transaction ID of the transaction is assigned.

In this example, the transaction refers to a set of multiple operations, and when multiple operations combined into one transaction are all successfully executed, it indicates that the transaction is successfully executed; when at least one operation among the multiple operations combined into one transaction is not successfully executed, it indicates that the transaction is executed unsuccessfully.

If the LCRs obtained in step 201 are LCRs generated after an operation on at least one transaction, the LCRs generated from the same transaction operation include LCRs of transaction control type and LCRs of Data Manipulation Language (DML) type. The LCRs of transaction control type include: one of LCRs of commit type and LCRs of rollback type, and LCRs of begin tran type; LCRs of DML type include: at least one of LCRs of insert type, LCRs of update, and LCRs of delete type.

The specific implementation process of step 203 is as follows:

firstly, judging whether the source database has the ability of supporting transactions, and if the source database does not have the ability of supporting transactions, directly skip to step 208; otherwise, further judging whether the transaction operations carried out in the source database have been filtered or not, and whether the provided LCRs are all LCRs of the successfully executed transactions; if yes, directly skip to step 208; otherwise, assigning a data buffer area represented by the transaction ID of the transaction.

If the received LCRs from the source database do not include the LCRs of transaction control type, it can be considered that the source database does not have the ability of supporting transactions; if it is confirmed through other configuration conditions that the source database has the ability of supporting transactions, and the LCRs from the source database do not include the LCRs of transaction control type, it can be considered that the source database has filtered the transaction operations, and the provided LCRs are all LCRs of successfully executed transactions.

In step 203, when LCRs of begin tran type are identified in the LCRs from the source database, it is considered that a new transaction is started, a data buffer area is assigned for the transaction, and various data buffer areas are distinguished from each other through the corresponding transaction IDs.

In step 204, LCRs of the DML type are determined among the LCRs with the same transaction ID.

In the LCRs generated from the same transaction operation, the LCRs of insert type, the LCRs of update type, and the LCRs of delete type are the LCRs of DML type.

In step 205, the determined LCRs are stored in the data buffer area represented by the same transaction ID according to the time order of generation.

In this step, the determined LCRs can be arranged in the time order of generation, and then the arranged LCRs are stored in the data buffer area such that the order of LCRs subsequently received by the destination database is the same with the order of LCRs generated when the source database performs an operation on the data.

For example, the data in the source database and the destination database are "ABC", the source database performs two operations on the data, which is deleting "A" and updating to "ABCD" respectively, therefore, after the above two operations are completed, the data in the source database are "ABCD"; if the two LCRs received by the destination database in the execution order of the operations are deleting "A" and updating to "ABCD" respectively, then after the application in the destination database receives the two LCRs, data synchronization with the source database is achieved; if the destination database firstly applies the LCR of updating to "ABCD", and then applies the LCR of deleting "A", then after application of the two LCRs, data synchronization is not achieved between the destination database and the source database.

Step 206, it is judged whether the LCRs with the same transaction ID include LCRs of commit type or LCRs of rollback type, if LCRs of commit type are included, step 208 is executed; if LCRs of rollback type are included, step 207 is executed.

In this example, if the LCRs with the same transaction ID include LCRs of commit type, it indicates that the corresponding transaction is successfully executed, and the subsequent data synchronization operation is continued; if LCRs of rollback type are included, it indicates that the corresponding transaction needs to be rolled back, and it does not need to continue to execute the data synchronization operation.

In step 207, the LCRs with the same transaction ID are all released, and the data synchronization for the released LCRs is ended.

After step 207 is completely executed, if there are other unreleased LCRs that need data synchronization, the subsequent steps are continued; otherwise, step 201 is proceeded, or the data synchronization is ended.

In this example, steps 203 to steps 207 are optimization steps, wherein whether the transaction operation is successfully performed can be further judged on the basis of ensuring data synchronization between the source database and the destination database, and the LCRs generated by the unsuccessfully executed transaction will not be sent to the destination database, thereby reducing transmission of useless information, and also reducing useless data synchronization made by the destination database.

In step 208, regarding each LCR, it is judged whether a LCR having the same key word as the obtained LCR exists in the LCR data buffer pool, if yes, step 209 is executed; otherwise, step 210 is executed.

A LCR data buffer pool is maintained in this example for buffering multiple LCRs in each record, and the LCRs entering the LCR data buffer pool corresponding to the same record have the same key word.

In step 209, the LCRs are merged and then are stored into the LCR data buffer pool, and then skip to step 211.

In step 210, the LCRs are stored into the LCR data buffer pool, and then skip to step 211.

In this example, in order to reduce the multiple DML operations for the same record, the LCRs having the same key words may be merged. For example, the source database and the destination database are population census databases, initially they both store a record of "name: San Zhang/ID number: 012345678/age: 25/residence: Beijing", with the key word of "ID number: 0123456789". The period of performing a data operation in the source database is 1s, and the period of performing a data synchronization in the destination database is 3s; the item of "age" in the above record is updated to 26 in the first second, generating LCR_1 of update type, and since it is the first LCR for the above record, LCR_1 is stored into the LCR data buffer pool; the item of "residence" in the above record is deleted in the 2^{nd} second, generating LCR_2 of delete type, and before storing the LCR_2 into the LCR data buffer pool, LCR_1 and LCR_2 are merged, since LCR_1 and LCR_2 cannot reduce the carried information, merging ofLCR_1 and LCR_2 may be regarded as not operating, and LCR_2 is directly stored into the LCR data buffer pool; the item of "age" in the above record is updated to 25 in the third second, generating LCR_3 of update type, and LCR_1, LCR_2 and LCR_3 are merged, LCR_1 and LCR_3 are merged into LCR_3, and the LCR_2 and LCR_3 obtained after merging are used for subsequent operations. Furthermore, since the item of "age" is actually not amended after executing LCR_1 and LCR_3 in the source database, LCR_1, LCR_2 and LCR_3 may be merged to only generate LCR_2 for subsequent operations.

The above steps 208 to steps 210 are optimization steps, which can further decrease the number of transmitted LCRs on the basis of ensuring the data synchronization between the source database and the destination database, and reduce the data synchronization operations of the destination database.

In step 211, the LCR format supported by the destination database is detected.

In step 212, the LCR obtained in step 211 is transformed to the format supported by the destination database and then is sent to the destination database.

This example is not limited to the scheme of skipping to step 211 after step 206, or the scheme of skipping to step 208 after step 202.

### Example four:

This example four of the present invention describes the scheme of example three through a typical application scene.

It is assumed that both the source database and the destination database maintain a demonstration tab (DEMO_TAB), and the definition is as follows:
CREATE TABLE DEMO_TAB( //establishing a demonstration tab
FLD_A NUMBER PRIMARY KEY,
FLD_B CHAR(100),
FLD_C VARCHAR(100))

The above three fields of FLD_A, FLD_B and FLD_C represent three data types.

The first step: a transaction is executed in the source database.
BEGIN TRAN //Begin tran operation
INSERT INTO DEMO_TAB VALUES(1, 'CHAR1', 'VARCHAR1'); //Insert operation
UPDATE DEMO_TAB SET //Update operation
FLD_B='CHAR2', FLD_C='VARCHAR2' WHERE A=1;
COMMIT; //Commit operation

The second step: four LCRs of begin tran type, insert type, update type and commit type generated in the first step are collected.

The third step: a data buffer area is opened up for the above four LCRs.

The fourth step: the LCRs of the insert type and the update type are stored into the data buffer area according to the generation order.

The fifth step: it is considered that the transaction is over after the LCR of commit type is received.

The sixth step: all DML LCRs in the data buffer area are stored into the LCR data buffer pool in turn.

The seventh step: the LCRs stored into the LCR data buffer pool are merged with the existing LCRs corresponding to the same record.

The eighth step: the merged LCR is transformed to the format supported by the destination database and then is sent to the destination database.

Through the scheme of example three and example four of the present invention, on the basis of successfully achieving data synchronization between the source database and the destination database, the number of LCRs to be transmitted and the number of times of data synchronization to be executed by the destination database are further reduced, and the occupation of system resources is decreased.

### Example five:

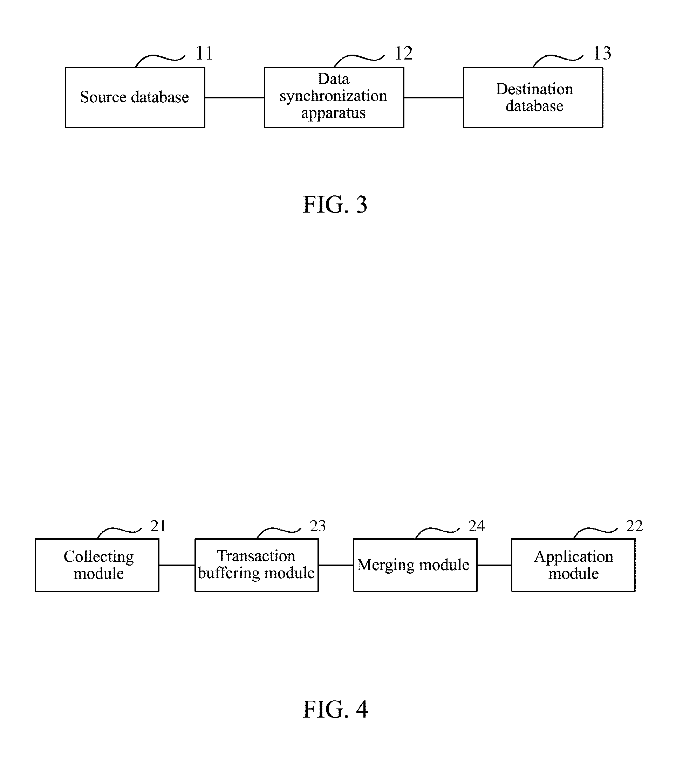

As shown in FIG. 3, example five of the present invention provides a system for achieving data synchronization between databases, and the system comprises: a source database 11, a data synchronization apparatus 12 and a destination database 13, wherein: the source database 11 is used to generate logical change records (LCRs) after a data operation; the data synchronization apparatus 12 is used to obtain the LCRs generated in the source database, detect a LCR format supported by the destination database, transform the obtained LCRs generated in the source database to the format supported by the destination database, and then send the transformed LCRs to the destination database 13; the destination database 13 is used to receive the LCR from the apparatus for data synchronization.

The data synchronization apparatus 12 is specifically used to transform the obtained LCR format generated in the source database 11 to a standard format firstly and then to the format supported by the destination database 13.

The data synchronization apparatus 12 is also used to, for the LCRs generated in the same transaction operation, assign a data buffer area represented by the transaction ID of the transaction, determine the LCRs of DML type among the LCRs with the same transaction ID, store the determined LCRs into the data buffer area represented by the same transaction ID according to the time order of generation, and judge whether there are LCRs of commit type or LCRs of rollback type in the LCRs with the same transaction ID, if there are LCRs of commit type, transform the LCRs stored into the data buffer area into the format supported by the destination database and then send them out; if there are LCRs of rollback type, release the data buffer area and end the data synchronization between databases.

The data synchronization apparatus 12 is also used to, for each LCR, judge whether there is any LCR having the same key word as the obtained LCR in the LCR data buffer pool, if not, store the obtained LCR into the LCR data buffer pool; otherwise, merge the LCRs having the same key word, and store the merged LCR into the LCR data buffer pool; and, transform the LCRs stored into the LCR data buffer pool to the format supported by the destination database and then send them out.

The system in example five is a system under the same inventive concept of Example one to Example four, and the data synchronization apparatus 12 may be the executing body in each step in Example one and Example three.

### Example six:

As shown in FIG. 4, it illustrates the structure of the apparatus 12 for data synchronization between databases in Example six of the present invention, and the apparatus comprises: a collecting module 21 and an application module 22, wherein: the collecting module 21 is used to obtain logical change records (LCRs) generated after a data operation in a source database; the application module 22 is used to detect a LCR format supported by a destination database, transform the obtained LCRs generated in the source database to the format supported by the destination database, and then send the transformed LCRs to the destination database.

The application module 22 is specifically used to transform the obtained LCR format generated in the source database to a standard format firstly and then to the format supported by the destination database.

The apparatus further comprises a transaction buffering module 23, which is used to, for the LCRs generated in the same transaction operation, assign a data buffer area represented by the transaction ID of the transaction, determine the LCRs of DML type among the LCRs with the same transaction ID, store the determined LCRs into the data buffer area represented by the same transaction ID according to the time order of generation, and judge whether there are LCRs of commit type or LCRs of rollback type in the LCRs with the same transaction ID, if there are LCRs of commit type, trigger the application module 22 using the LCRs stored into the data buffer area; if there are LCRs of rollback type, release the data buffer area and end the data synchronization between databases.

The apparatus further comprises a merging module 24, which is used to, for each LCR, judge whether there is any LCR having the same key word as the obtained LCR in the LCR data buffer pool, if not, store the obtained LCR into the LCR data buffer pool; otherwise, merge the LCRs having the same key word, and store the merged LCR into the LCR data buffer pool; the application module 22 is specifically used to transform the LCRs stored into the LCR data buffer pool to the format supported by the destination database and then send them out.

A person skilled in the art should appreciate that the examples of the present application may be provided as method, system, or a computer program product. Therefore, the present application may take the form of completely hardware examples, completely software examples, or hardware and software combined examples. Moreover, the present application may adopt the form of a computer program product implemented on one or more computer readable storage medium (including but not limited to a disk storage, a CD-ROM, an optical disk, etc) containing computer usable program codes.

The present application is described with reference to the flowcharts and/or block diagrams of the method, apparatus (system) and computer program product of the examples of the present invention. It should be understood that a computer program instruction is used to implement each flow and/or block in the flowcharts and/or block diagrams, and combination of flows/blocks in the flowcharts and/or block diagrams. These computer program instructions may be provided to a universal computer, a special computer, an embedded processor or processors of other programmable data processing devices to generate a machine such that an apparatus for implementing the functions specified in one or more flow in the flowcharts and/or one or more blocks in the block diagrams is generated through the instructions executed by the computer or the processor of other programmable data processing devices.

These computer program instructions may also be stored in a computer readable memory that can direct the computer or other programmable data processing devices to work in a particular manner such that the instruction stored in the computer readable memory generates a product including an instruction apparatus, which implements the functions specified in one or more flows in the flowchart and/or one or more blocks in the block diagram.

These computer program instructions may also be loaded in a computer or other programmable data processing devices such that a series of operation steps are executed on the computer or other programmable data processing devices to generate computer implemented processing, and thus the instruction executed on the computer or other programmable data processing devices provides the steps for implementing the functions specified in one or more flows in the flowchart and/or one or more blocks in the block diagram.

Although the preferred examples of the present application have been described, a person skilled in the art, once obtaining the basic inventive concept, can make additional variations and modifications to these examples. Therefore, the attached claims are intended to be interpreted as including the preferred examples and all variations and modifications falling into the scope of the present application.

Obviously, a person skilled in the art can make various changes and transformations to the present invention without departing from the spirit and scope of the present invention. Thus, if these changes and transformations made to the present invention fall into the scope of the claims of the present invention and equivalent technology thereof, the present invention is also intended to include these changes and transformations.

## Claims

1. A method for data synchronization between databases, comprising the following steps of:
obtaining logical change records (LCRs) generated after a data operation in a source database;
detecting a LCR format supported by a destination database, transforming the obtained LCRs generated in the source database to the format supported by the destination database, and then sending the transformed LCRs to the destination database.

2. The method according to claim 1, wherein, after obtaining the LCRs generated in the source database and before detecting the LCR format supported by the destination database, the method further comprises:
transforming a format of the obtained LCRs generated in the source database to a standard format;
the step of transforming the obtained LCRs generated in the source database to the format supported by the destination database comprises:
further transforming the LCRs that have been transformed to the standard format to the format supported by the destination database.

3. The method according to claim 2, wherein, the obtained LCRs are LCRs generated after an operation on at least one transaction in the source database;
after transforming the format of the LCRs to the set format, and before detecting the LCR format supported by the destination database, the method further comprises:
for the LCRs generated from the operation made on the same transaction, assigning a data buffer area represented by a transaction ID of the transaction;
determining LCRs of Data Manipulation Language (DML) type from the LCRs with the same transaction ID;
storing the determined LCRs in the data buffer area represented by the same transaction ID according to a time order of generation;
judging whether there are LCRs of commit type or LCRs of rollback type in the LCRs with the same transaction ID, if there are LCRs of commit type, using the LCRs stored in the data buffer area to execute the step of detecting the LCR format supported by the destination database; if there are LCRs of rollback type, releasing the data buffer area, and ending the data synchronization between the databases.

4. The method according to claim 3, wherein, types of the data operation comprise at least one of insert, update and delete.

5. The method according to claim 1, 2 or 3, wherein, after obtaining the LCRs generated in the source database and before detecting the LCR format supported by the destination database, the method further comprises:
regarding each obtained LCR, judging whether there are LCRs having a same key word as the obtained LCR in a LCR data buffer pool;
if not, storing the obtained LCRs into the LCR data buffer pool; otherwise, merging the LCRs having the same key word and storing the merged LCR into the LCR data buffer pool;
the step of transforming the obtained LCRs generated in the source database to the format supported by the destination database comprises:
transforming the LCRs stored into the LCR data buffer pool to the format supported by the destination database.

6. A system for data synchronization between databases, comprising:
a source database, configured to generate logical change records (LCRs) after a data operation;
an apparatus for data synchronization, configured to obtain the LCRs generated in the source database, detect a LCR format supported by a destination database, transform the obtained LCRs generated in the source database to the format supported by the destination database, and then send the transformed LCRs to the destination database;
a destination database, configured to receive the LCR from the apparatus for data synchronization.

7. The system according to claim 6, wherein,
the apparatus for data synchronization is specifically configured to transform the obtained LCR format generated in the source database to a standard format firstly and then to the format supported by the destination database.

8. The system according to claim 7, wherein,
the apparatus for data synchronization is further configured to, for the LCRs generated from an operation on a same transaction, assign a data buffer area represented by a transaction ID of the transaction, determine the LCRs of Data Manipulation Language (DML) type among the LCRs with the same transaction ID, store the determined LCRs into the data buffer area represented by the same transaction ID according to a time order of generation, and judge whether there are LCRs of commit type or LCRs of rollback type in the LCRs with the same transaction ID, if there are LCRs of commit type, transform the LCRs stored into the data buffer area to the format supported by the destination database and then send out; if there are LCRs of rollback type, release the data buffer area and end the data synchronization between databases.

9. The system according to claim 6, 7 or 8, wherein,
the data synchronization apparatus is further configured to, for each LCR, judge whether there is any LCR having the same key word as the obtained LCR in the LCR data buffer pool, if not, store the obtained LCR into the LCR data buffer pool; otherwise, merge the LCRs having the same key word, and store the merged LCR into the LCR data buffer pool; and, transform the LCRs stored into the LCR data buffer pool to the format supported by the destination database and then send out.

10. An apparatus for data synchronization between databases, comprising:
a collecting module, configured to obtain logical change records (LCRs) generated after a data operation in a source database;
an application module, configured to detect a LCR format supported by a destination database, transform the obtained LCRs generated in the source database to the format supported by the destination database, and then send the transformed LCRs to the destination database.

11. The apparatus according to claim 10, wherein,
the application module is specifically configured to transform the obtained LCR format generated in the source database to a standard format firstly and then to the format supported by the destination database.

12. The apparatus according to claim 11, wherein, the apparatus further comprises:
a transaction buffering module, which is configured to, for the LCRs generated from an operation on a same transaction, assign a data buffer area represented by the transaction ID of the transaction, determine the LCRs of Data Manipulation Language (DML) type among the LCRs with the same transaction ID, store the determined LCRs into the data buffer area represented by the same transaction ID according to a time order of generation, and judge whether there are LCRs of commit type or LCRs of rollback type in the LCRs with the same transaction ID, if there are LCRs of commit type, trigger the application module using the LCRs stored into the data buffer area; if there are LCRs of rollback type, release the data buffer area and end the data synchronization between databases.

13. The apparatus according to claim 10, 11 or 12, wherein, the apparatus further comprises:
a merging module, which is configured to, for each LCR, judge whether there is any LCR having the same key word as the obtained LCR in the LCR data buffer pool, if not, store the obtained LCR into the LCR data buffer pool; otherwise, merge the LCRs having the same key word, and store the merged LCR into the LCR data buffer pool;
the application module is specifically configured to transform the LCRs stored into the LCR data buffer pool to the format supported by the destination database and then send out.
